# EUROPÄISCHE PATENTSCHRIFT

(11) **EP 2 564 448 B1**
(45) Veröffentlichungstag und Bekanntmachung des Hinweises auf die Patenterteilung: **12.02.2014**
(21) Anmeldenummer: 11704995.7
(22) Anmeldetag: 28.02.2011
(51) Int. Cl.: H01M 2/10, H01M 10/50, H01M 6/50, H01M 10/0525

(54) **BATTERIE MIT EINER KÜHLPLATTE UND KRAFTFAHRZEUG MIT EINER ENTSPRECHENDEN BATTERIE**
BATTERY HAVING A COOLING PLATE AND MOTOR VEHICLE HAVING A CORRESPONDING BATTERY
BATTERIE COMPRENANT UNE PLAQUE DE REFROIDISSEMENT ET VÉHICULE À MOTEUR COMPRENANT UNE BATTERIE CORRESPONDANTE

(30) Priorität: 26.04.2010 DE 102010028191
(43) Veröffentlichungstag der Anmeldung: 06.03.2013
(73) Patentinhaber: Samsung SDI Co., Ltd., Gyeonggi-do (KR); Robert Bosch GmbH, 70442 Stuttgart (DE)
(72) Erfinder: GENDLIN, Boris, 70794 Filderstadt (DE); DILL, Marc, 70176 Stuttgart (DE); ANGERBAUER, Ralf, 71696 Möglingen (DE); BUBECK, Conrad, 73728 Esslingen (DE); RUEHLE, Andreas, 70374 Stuttgart (DE)
(74) Vertreter: Bee, Joachim
(86) Internationale Anmeldenummer: PCT/EP2011/052901
(87) Internationale Veröffentlichungsnummer: WO 2011/134699

(56) Entgegenhaltungen:
- EP-A2- 1 278 263
- WO-A1-2005/101939
- DE-A1-102005 031 504
- DE-A1-102008 034 860
- DE-U1- 7 618 323
- US-A- 5 756 227

## Beschreibung

Die Erfindung betrifft eine Batterie mit einer Kühlplatte und ein Kraftfahrzeug mit dieser Batterie, wobei die Batterie durch die Ausgestaltung eines Befestigungssystems eine besonders effiziente Montage und Kühlung erlaubt.

### Stand der Technik

Es ist bekannt, Batteriemodule mit ihrer Unterseite auf einer Oberseite einer Kühlplatte anzuordnen. Dabei sind Bohrungen in der Kühlplatte angeordnet und die Batteriemodule mittels Verschraubungen mit der Kühlplatte verbunden. Nachteilig hierbei ist, dass ein Anbringen der Verschraubungen von einer Unterseite der Kühlplatte her erfolgen muss, was einen Montageprozess verkompliziert. Zudem ist ein definierter Anpressdruck der Batteriemodule auf die Kühlplatte nur verhältnismäßig aufwendig über eine Ermittlung des Drehmoments der Schrauben beim Eindrehen zu realisieren. Der Anpressdruck sollte eine definierte Größe erreichen, damit ein thermischer Übergangswiderstand zwischen den Batteriemodulen und der Kühlplatte möglichst gering ist.

Es sind auch Anordnungen von Akkumulatorbatteriegehäusen auf einer Unterlage mittels Schienen bekannt. So geht aus der DE 7618323 U eine Vorrichtung zur Halterung von einer aus einer Mehrzahl von nebeneinander angeordneten Gehäusen bestehenden Akkumulatorbatterie auf einer Unterlage hervor. Dazu ist an dem Boden jedes Akkumulatorbatteriegehäuses im Bereich seiner Mitte eine senkrecht zur Mittelebene der Batterie gerichtete Schiene befestigt, die einen parallel zur Schiene gerichteten hakenartigen Vorsprung besitzt, der zwischen sich und der Schiene einen der Länge und der Stärke des Vorsprungs entsprechenden Zwischenraum bildet. Auf der Unterlage sind gleiche Schienen mit gegenüber den an den Gehäusen befestigten Schienen entgegengesetzt gerichteten Vorsprüngen befestigt und der Abstand je zweier auf der Unterlage befestigter Schienen ist derart bemessen, dass sich die einzelnen, die Akkumulatorbatterie bildenden Gehäuse gegenseitig seitlich abstützen.

DE 10 2005 031 504 A offenbart eine weitere aus dem Stand der Technik bekannte Batterie.

Offenbarung der Erfindung

Erfindungsgemäß wird eine Batterie mit den in Anspruch 1 genannten Merkmalen zur Verfügung gestellt. Die Batterie ist bevorzugt eine Li-Ionen-Batterie.

Hiermit ist es vorteilhaft ermöglicht, Batteriemodule auf der Kühlplatte anzuordnen, ohne dass die Unterseite der Kühlplatte zugänglich sein muss. Während einer Montage der erfindungsgemäßen Batterie muss die Kühlplatte nun nicht mehr gedreht werden, wodurch der Montageprozess vereinfacht ist. Mittels der Schienen ist zudem vorteilhaft ein Einschieben der Batteriemodule ermöglicht, wodurch die Batteriemodule geführt auf ihre vorgesehene Position gelangen können. Aufwendiges Nachpositionieren entfällt somit während einer Montage. So kann die erfindungsgemäße Batterie einfacher und schneller montiert oder gewartet werden.

In einer bevorzugten Ausgestaltung der Erfindung ist vorgesehen, dass mittels des Befestigungssystems das wenigstens eine Batteriemodul auf der Kühlplatte mit einem vordefinierten Anpressdruck befestigt ist, bevorzugt mit einem Anpressdruck von mindestens 3 bar, noch bevorzugter von mindestens 5 bar. Durch den definierten Anpressdruck wird vorteilhaft ein möglichst geringer thermischer Übergangswiderstand zwischen der Unterseite des Batteriemoduls und der Kühlplatte erzeugt.

In einer weiteren bevorzugten Ausgestaltung der Erfindung ist vorgesehen, dass der direkte Kontakt der Unterseite des Batteriemoduls mit der Oberseite der Kühlplatte wärmeleitend ausgebildet ist. Hiermit ist vorteilhaft eine effiziente Ableitung der Wärme des Batteriemoduls möglich.

Erfindungsgemäß ist vorgesehen, dass die Schienen ein T-Profil oder ein L-Profil aufweisen. Damit können leicht verfügbare, vorgefertigte Profile zur Herstellung verwendet werden, was vorteilhaft Materialkosten spart.

In einer weiteren bevorzugten Ausgestaltung der Erfindung ist vorgesehen, dass mittels der Unterseite des Batteriemoduls und der Schienen des Befestigungssystems ein Nut- und Federsystem ausgebildet ist. Hiermit ist vorteilhaft eine genaue und schnelle Positionierung des Batteriemoduls auf der Kühlplatte gewährleistet. Die Nut und Feder können zudem ebenfalls wärmeleitend miteinander verbunden sein, wodurch die zur Kühlung verwendbare Oberfläche vergrößert und eine höhere Kühlleistung vorteilhaft möglich wird.

Erfindungsgemäß ist vorgesehen, dass die Unterseite des Batteriemoduls mindestens einen Vorsprung aufweist, der zum Eingriff in die Schienen des Befestigungssystems ausgebildet ist. Mit dem Vorsprung der Unterseite des Batteriemoduls ist vorteilhaft eine besonders einfach zu realisierende und damit kostengünstige Verbindungsmöglichkeit zwischen dem Batteriemodul und der Kühlplatte geschaffen.

In einer weiteren bevorzugten Ausgestaltung der Erfindung ist vorgesehen, dass die Unterseite des Batteriemoduls in ihrer Gesamtheit die Oberseite der Kühlplatte direkt kontaktiert. Hiermit ist das Batteriemodul mit der größtmöglichen Fläche seiner Unterseite mit der Kühlplatte verbunden, wodurch vorteilhaft der Kühleffekt verstärkt wird.

In einer weiteren bevorzugten Ausgestaltung der Erfindung ist vorgesehen, dass die Schienen Bohrungen zur Aufnahme von Schrauben aufweisen, derart, dass die Schienen durch Schrauben von der Oberseite der Kühlplatte her befestigbar ausgebildet sind. Hiermit ist vorteilhaft ein haltbares und dauerhaftes Fixieren der Schienen mit einfachen Mitteln und einem hohen zusätzlichen Anpressdruck ermöglicht.

In einer weiteren bevorzugten Ausgestaltung der Erfindung ist vorgesehen, dass die Kühlplatte Kühlmittelkanäle aufweist. Mittels der Kühlkanäle kann die Kühlplatte vorteilhaft von Kühlmittel durchströmt und eine erhöhte Kühlleistung erzielt werden.

Erfindungsgemäß wird zudem ein Kraftfahrzeug bereitgestellt, mit einer Batterie in den zuvor genannten Ausgestaltungen, wobei die Batterie mit einem Antriebssystem des Kraftfahrzeugs verbunden ist. Die Vorteile der erfindungsgemäßen Batterie als Bauteil kommen so auch dem Kraftfahrzeug als Baugruppe zugute.

Vorteilhafte Weiterbildungen der Erfindung sind in den Unteransprüchen angegeben und in der Beschreibung ausgeführt.

Der Begriff Batterie schließt in dieser Anmeldung auch Batteriesysteme, Akkumulatorbatterien, Akkumulatoren, Akkumulatorsysteme, insbesondere Li-Ionen-Systeme oder Li-Polymer-Ionen-Systeme mit ein.

### Zeichnungen

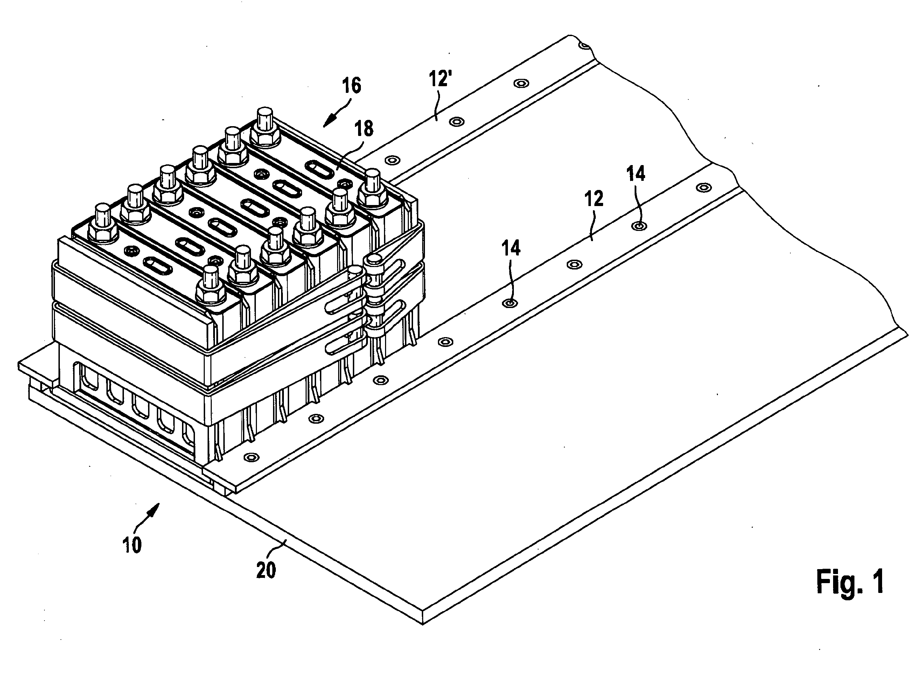

Die Erfindung wird anhand einer Zeichnung und der nachfolgenden Beschreibung näher erläutert. Figur 1 zeigt eine erfindungsgemäße Kühlplatte.

### Ausführungsformen der Erfindung

In Fig. 1 ist ein Beispiel einer erfindungsgemäßen Kühlplatte 10 abgebildet. Auf ihrer Oberseite 20 sind hier zwei Schienen, eine Mittelschiene 12 und eine Außenschiene 12' angeordnet. Zwischen der Mittelschiene 12 und der Außenschiene 12' ist in der Abbildung ein Batteriemodul 16 positioniert. Das Batteriemodul 16 ist bevorzugt aus mehreren in Reihe angeordneten Batteriezellen 18 gebildet.

Die Kühlplatte 10 dient einer Temperierung des zumindest einen Batteriemoduls 16. Dazu ist die Kühlplatte 10 vorzugsweise aus Metall gefertigt, da Metalle einen hohen Wärmeleitkoeffizienten besitzen. Das Batteriemodul 16 steht nach einer Montage direkt mit der Kühlplatte 10 in Kontakt. Bevorzugt kontaktiert die Unterseite des Batteriemoduls 16 die Oberseite 20 der Kühlplatte 10 direkt. Dabei ist die Unterseite des Batteriemoduls 16 wärmeleitend mit der Oberseite 20 der Kühlplatte 10 verbunden, bevorzugt die gesamte Unterseite des Batteriemoduls 16. Ein Luftspalt, der einen Wärmeleitwiderstand darstellt, ist zwischen der Unterseite des Batteriemoduls 16 und der Oberseite 20 der Kühlplatte 10 nicht vorhanden. Möglich ist auch, dass die Unterseite des Batteriemoduls 16 oder die Oberseite 20 der Kühlplatte 10 mit Wärmeleitpaste ausgebildet ist, um den Wärmeleitwiderstand weiter zu verringern.

Erfindungsgemäß ist es auch möglich, dass die Kühlplatte 10 Kühlmittelkanäle aufweist, durch welche ein fluides Kühlmittel strömen und so eine zusätzliche Kühlleistung erzeugen kann.

Die Schienen 12, 12' sind beabstandet zueinander auf der Oberseite 20 der Kühlplatte 10 angeordnet, bevorzugt parallel zueinander. Erfindungsgemäß sind die Schienen 12, 12' aus Kunststoff oder Metall oder aus Kunststoff und Metall ausgeführt. Sie sind dabei als T-Profil oder als L-Profil gestaltet, wobei jeweils der Steg der Profile mit der Oberseite 20 verbunden ist. Mit der Ausbildung der Schienen 12, 12' als T-Profil oder L-Profil ist zwischen dem Gurt der Profile und der Oberseite 20 ein Hinterschnitt geschaffen, in welchen eine entsprechende Ausformung an der Unterseite des Batteriemoduls 16 eingreifen kann. Die Ausformung an der Unterseite des Batteriemoduls 16 korrespondiert dabei in der Weise mit dem Hinterschnitt, dass in Richtung senkrecht zur Oberseite 20 der Kühlplatte 10 ein Formschluss hergestellt ist und das Batteriemodul 16 mit einem vorbestimmten Anpressdruck auf der Kühlplatte 10 positioniert ist. Vorzugsweise ist die Ausformung als Überstand an der Unterseite des Batteriemoduls 16 gebildet. Die Unterseite des Batteriemoduls 16 kann dazu eine Grundplatte aufweisen, welche seitliche Abmessungen des übrigen Batteriemoduls übersteigt und so in eine Nut oder Aussparung der Schiene greift. Es ist auch möglich, dass Seitenteile des Batteriemoduls 16 eine entsprechende Kerbe beziehungsweise Aussparung aufweisen, in welche die Gurte der Profile eingreifen. Die Unterseite des Batteriemoduls 16 und die Schienen 12, 12' können in einem Ausführungsbeispiel auch als Nut- und Federsystem ausgebildet sein.

Entsprechend der Fig. 1 sind T-Profile angeordnet. Das bietet die Möglichkeit, auf beiden Seiten einer Schiene 12 oder 12' Batteriemodule 16 anzuordnen.

Die Ausformung an der Unterseite des Batteriemoduls 16 ist dabei so gestaltet, dass das Batteriemodul 16 mit seiner Unterseite auf der Oberseite 20 der Kühlplatte 10 flächig aufliegt. Zur Montage wird das zumindest eine Batteriemodul 16 seitlich, in Längsrichtung zu den Schienen 12, 12', zwischen die Schienen 12, 12' geschoben oder die Schienen 12, 12' werden positioniert, nachdem das Batteriemodul 16 angeordnet wurde.

In Fig. 1 weisen die Schienen 12, 12' Bohrungen 14 auf. Mittels Verschraubungen durch diese Bohrungen 14 in die Oberseite 20 der Kühlplatte 10 sind die Schienen 12, 12' und das Batteriemodul 16 fixiert. Erfindungsgemäß sind auch andere Fügemöglichkeiten zur Fixierung der Schienen 12, 12' vorgesehen, beispielsweise Nieten, Stanzen, Kleben oder Schweißen. Es ist zudem eine Ausgestaltung der erfindungsgemäßen Kühlplatte 10 vorgesehen, bei der die Schienen 12, 12' aus der Oberseite 20 ausgeformt sind.

Ist das Batteriemodul 16 angeordnet und sind die Schienen 12, 12' fixiert, so üben die Schienen 12, 12' durch elastische Verformung eine kontinuierliche Kraft im Wesentlichen senkrecht und in Richtung zur Oberseite 20 auf die Ausformung an der Unterseite des Batteriemoduls 16 aus. Dadurch ist das Batteriemodul 16 mit einem definierten Anpressdruck auf der Kühlplatte 10 angeordnet. Der definierte Anpressdruck gewährleistet einen möglichst geringen thermischen Übergangswiderstand zwischen Batteriemodul 16 und Kühlplatte 10. Er liegt erfindungsgemäß bei mindestens 3 bar, noch bevorzugter bei 5 bar.

## Patentansprüche

1. Batterie mit wenigstens einem Batteriemodul (16) mit einer Unterseite, einer Kühlplatte (10) mit einer Oberseite (20) und einem auf der Oberseite (20) der Kühlplatte (10) angeordneten Befestigungssystem für das wenigstens eine Batteriemodul (16), **dadurch gekennzeichnet, dass** das Befestigungssystem wenigstens zwei beabstandet zueinander verlaufende Schienen (12, 12') aufweist und mittels der Schienen (12, 12') das wenigstens eine Batteriemodul (16) derart auf der Kühlplatte (10) befestigt ist, dass die Unterseite des Batteriemoduls (16) in direktem Kontakt mit der Oberseite (20) der Kühlplatte (10) steht, wobei die Schienen (12, 12') ein T-Profil oder ein L-Profil aufweisen und die Unterseite des Batteriemoduls (16) mindestens einen Vorsprung aufweist, der zum Eingriff in die Schienen (12, 12') des Befestigungssystems ausgebildet ist.

2. Batterie nach Anspruch 1, wobei mittels des Befestigungssystems das wenigstens eine Batteriemodul (16) auf der Kühlplatte (10) mit einem vordefinierten Anpressdruck befestigt ist, bevorzugt mit einem Anpressdruck von mindestens 3 bar, noch bevorzugter von mindestens 5 bar.

3. Batterie nach Anspruch 1 oder 2, wobei der direkte Kontakt der Unterseite des Batteriemoduls (16) mit der Oberseite (20) der Kühlplatte (10) wärmeleitend ausgebildet ist.

4. Batterie nach einem der vorhergehenden Ansprüche, wobei mittels der Unterseite des Batteriemoduls (16) und der Schienen (12, 12') des Befestigungssystems ein Nut- und Federsystem ausgebildet ist.

5. Batterie nach einem der vorhergehenden Ansprüche, wobei die Unterseite des Batteriemoduls (16) in ihrer Gesamtheit die Oberseite (20) der Kühlplatte (10) direkt kontaktiert.

6. Batterie nach einem der vorhergehenden Ansprüche, wobei die Schienen (12, 12') auf ihrer Oberseite Bohrungen (14) zur Aufnahme von Schrauben aufweisen, derart, dass die Schienen (12, 12') mittels Schrauben von der Oberseite (20) der Kühlplatte (10) her befestigbar sind.

7. Batterie nach einem der vorhergehenden Ansprüche, wobei die Kühlplatte (10) Kühlmittelkanäle aufweist.

8. Kraftfahrzeug mit einer Batterie nach einem der Ansprüche 1 bis7, wobei die Batterie mit einem Antriebssystem des Kraftfahrzeugs verbunden ist.

## Claims

1. Battery having at least one battery module (16) with a lower side, a cooling plate (10) with an upper side (20), and a fixing system, arranged on the upper side (20) of the cooling plate (10), for the at least one battery module (16), **characterized in that** the fixing system has at least two rails (12, 12') running at a distance from each other and, by means of the rails (12, 12'), the at least one battery module (16) is fixed on the cooling plate (10) in such a way that the lower side of the battery module (16) is in direct contact with the upper side (20) of the cooling plate (10), wherein the rails (12, 12') have a T profile or an L profile and the lower side of the battery module (16) has at least one projection, which is designed for engagement in the rails (12, 12') of the fixing system.

2. Battery according to Claim 1, wherein the at least one battery module (16) is fixed on the cooling plate (10) by means of the fixing system with a predefined contact pressure, preferably with a contact pressure of at least 3 bar, more preferably of at least 5 bar.

3. Battery according to Claim 1 or 2, wherein the direct contact between the lower side of the battery module (16) and the upper side (20) of the cooling plate (10) is of heat-conducting design.

4. Battery according to one of the preceding claims, wherein a tongue and groove system is formed by means of the lower side of the battery module (16) and the rails (12, 12') of the fixing system.

5. Battery according to one of the preceding claims, wherein the whole of the lower side of the battery module (16) is in direct contact with the upper side (20) of the cooling plate (10).

6. Battery according to one of the preceding claims, wherein the rails (12, 12') have holes (14) to receive screws on the upper side thereof, such that the rails (12, 12') can be fixed by means of screws from the upper side (20) of the cooling plate (10).

7. Battery according to one of the preceding claims, wherein the cooling plate (10) has coolant ducts.

8. Motor vehicle having a battery according to one of Claims 1 to 7, wherein the battery is connected to a drive system of the motor vehicle.

## Revendications

1. Batterie comprenant au moins un module de batterie (16) pourvu d'un côté inférieur, une plaque de refroidissement (10) pourvue d'un côté supérieur (20) et un système de fixation, disposé sur le côté supérieur (20) de la plaque de refroidissement (10), pour l'au moins un module de batterie (16), **caractérisée en ce que** le système de fixation comprend au moins deux rails (12, 12') s'étendant de manière espacée les uns des autres et l'au moins un module de batterie (16) est fixé sur la plaque de refroidissement (10) au moyen des rails (12, 12'), de telle sorte que le côté inférieur du module de batterie (16) soit en contact direct avec le côté supérieur (20) de la plaque de refroidissement (10), les rails (12, 12') comprenant un profilé en T ou un profilé en L et le côté inférieur du module de batterie (16) comprenant au moins une saillie qui est réalisée en vue de l'entrée en prise dans les rails (12, 12') du système de fixation.

2. Batterie selon la revendication 1, dans laquelle l'au moins un module de batterie (16) est fixé, au moyen du système de fixation, sur la plaque de refroidissement (10) avec une pression d'appui prédéfinie, de préférence avec une pression d'appui d'au moins 3 bar, plus préférentiellement d'au moins 5 bar.

3. Batterie selon la revendication 1 ou 2, dans laquelle le contact direct du côté inférieur du module de batterie (16) avec le côté supérieur (20) de la plaque de refroidissement (10) est réalisé de manière thermoconductrice.

4. Batterie selon l'une quelconque des revendications précédentes, dans laquelle un système à rainure et à languette est réalisé au moyen du côté inférieur du module de batterie (16) et des rails (12, 12') du système de fixation.

5. Batterie selon l'une quelconque des revendications précédentes, dans laquelle le côté inférieur du module de batterie (16) est, dans son intégralité, directement en contact avec le côté supérieur (20) de la plaque de refroidissement (10).

6. Batterie selon l'une quelconque des revendications précédentes, dans laquelle les rails (12, 12') comprennent sur leur côté supérieur des alésages (14) pour loger des vis, de telle sorte que les rails (12, 12') puissent être fixés au moyen de vis depuis le côté supérieur (20) de la plaque de refroidissement (10).

7. Batterie selon l'une quelconque des revendications précédentes, dans laquelle la plaque de refroidissement (10) comprend des canaux de réfrigérant.

8. Véhicule à moteur comprenant une batterie selon l'une quelconque des revendications 1 à 7, dans lequel la batterie est connectée à un système d'entraînement du véhicule à moteur.
